# EUROPÄISCHE PATENTSCHRIFT

(11) **EP 3 717 313 B1**
(45) Veröffentlichungstag und Bekanntmachung des Hinweises auf die Patenterteilung: **11.08.2021**
(21) Anmeldenummer: 18811201.5
(22) Anmeldetag: 26.11.2018
(51) Int. Cl.: B60S 3/04

(54) **AUTOMATISCHES ERZEUGEN VON NOTBETRIEBSPROGRAMMEN FÜR EINE FAHRZEUGWASCHANLAGE IM FEHLERFALL**
AUTOMATIC PRODUCTION OF EMERGENCY OPERATION PROGRAMS FOR A VEHICLE WASHING SYSTEM IN THE EVENT OF A FAULT
GÉNÉRATION AUTOMATIQUE DE PROGRAMMES DE COMMANDE D'URGENCE POUR LE LAVAGE D'UN VÉHICULE EN CAS DE PANNE

(30) Priorität: 27.11.2017 DE 102017127978
(43) Veröffentlichungstag der Anmeldung: 07.10.2020
(73) Patentinhaber: WashTec Holding GmbH, 86153 Augsburg (DE)
(72) Erfinder: HEINZ, Bernhard, 86368 Gersthofen (DE)
(74) Vertreter: Schwarz, Claudia
(86) Internationale Anmeldenummer: PCT/EP2018/082505
(87) Internationale Veröffentlichungsnummer: WO 2019/101985

(56) Entgegenhaltungen:
- WO-A2-02/099579
- US-A1- 2016 059 831

## Beschreibung

Die vorliegende Erfindung liegt auf dem Gebiet der automatischen Waschanlagen für Fahrzeuge und betrifft insbesondere das Ansteuern eines Notbetriebs im Fehlerfall zum Notbetreiben der Waschanlage.

Die Waschanlagen umfassen eine Vielzahl von Maschinenbauteilen, wie Pumpen, Ventile, Antriebe etc., die in unterschiedlichen Konfigurationen in der Waschanlage installiert sein können. Darüber hinaus, hat jeder Betreiber spezifische Erfordernisse und Anforderungen (z.B. lokaler Wasserversorgungsdruck, typischer Verschmutzungsgrad der Fahrzeuge etc.). Diese Maschinenbauteile können teilweise mit einer elektronischen Schnittstelle und teilweise mit Sensoren ausgebildet sein, um einen fehlerfreien Betriebsmodus des jeweiligen Bauteils oder einen Ausfall eines Bauteils (Pumpe, Boiler, Ventile etc.) zu erfassen.

Die gattungsgemäße US 2016/0059831 A1 offenbart ein Fahrzeugwaschsystem mit einer Vielzahl von Fahrzeugwaschkomponenten. Das System umfasst eine Vielzahl von Leuchten, die in der Fahrzeugwaschanlage angeordnet sind.

Die WO02/099579 A2 offenbart eine Waschanlage mit einer computer-gestützten Steuerung, die lokal an der Maschine über ein UI vom Operator bedient werden kann und, die manuelle Eingriffsmöglichkeiten in den Waschablauf ermöglicht.

Im Stand der Technik ist es somit bekannt, Fehlersensoren an bestimmten Bauteilen der Waschanlage vorzusehen, um im Fehlerfall einen Fehlercode des ausgefallenen Bauteils bereitstellen zu können. So kann z.B. ein Sensor Nummer 23, der dem Boiler zugeordnet ist, signalisieren, dass der Boiler ausgefallen ist oder ein anderer Sensor, der einem Ventil zugeordnet ist, signalisieren, dass das Ventil nicht mehr fehlerfrei funktioniert. Bekannt ist es auch, aus Sensoren, die Nutzsignale liefern, die zur Steuerung und/oder Regelung der Anlage betrieben werden, Signale zu erfassen und aus diesen - möglicherweise aggregierten Signalen - einen Fehlerzustand zu ermitteln.

Im Stand der Technik hat es sich als nachteilig erwiesen, dass auch bei Fehlerzuständen, die eine eingeschränkte Funktion der Anlage ermöglichen würden (weil nur eine Teilfunktion ausgefallen ist), ein Servicetechniker gerufen werden muss und unter Umständen die komplette Anlage nicht mehr betrieben werden kann und stillsteht. Dies führt zu Stillstandzeiten, die leicht vermieden werden können, wenn z.B. das Bauteil nicht wesentlich für den Betrieb der Anlage ist oder wenn die Anlage mit ausgewählten und bestimmten Waschprogrammen weiterhin betrieben werden könnte, die den Einsatz des ausgefallenen Bauteils nicht erfordern.

Die Waschanlagen sind insbesondere in skandinavischen Ländern sehr verteilt lokalisiert, so dass ein Stillstand der Anlage bis zur Fehlerbeseitigung durch einen angeforderten Servicetechniker häufig sehr lange dauert.

Um dies zu vermeiden, ist es wünschenswert, den Fehlerzustand der Anlage vor Ort und lokal an der Anlage soweit analysieren zu können, um diese in einem Notbetrieb weiter betreiben zu können.

Ausgehend von diesem Stand der Technik hat sich die vorliegende Erfindung zur Aufgabe gestellt, das Betreiben von automatischen Fahrzeugwaschanlagen zu verbessern und insbesondere im Fehlerfall eine lokale Analyseprozedur bereitzustellen, um einen Notbetrieb zu ermöglichen. Weiterhin sollen die Betriebskosten der Anlage und der Wartungsaufwand gesenkt werden.

Diese Aufgabe wird jeweils durch den Gegenstand nach den beiliegenden einander nebengeordneten Patentansprüchen gelöst. Vorteilhafte Weiterbildungen finden sich in den Unteransprüchen.

Gemäß einem ersten Aspekt betrifft die Erfindung ein Verfahren zur Steuerung eines Notbetriebs einer Fahrzeugwaschanlage, falls also ein Fehler an der Fahrzeugwaschanlage oder an einem seiner Bauteile detektiert worden ist (also im Fehlerfall), der den normalen, weiteren Betrieb der Fahrzeugwaschanlage unmöglich macht.

Gemäß einem ersten Aspekt umfasst das Verfahren folgende Schritte:
- Erfassen einer Fehlermeldung eines Maschinenbauteils;
- Ermitteln eines Fehlerzustandes für die gesamte Fahrzeugwaschanlage (im Folgenden auch kurz als Waschanlage oder Maschine bezeichnet) auf Basis der erfassten Fehlermeldung;
- In Antwort auf den erfassten Fehlerzustand: Bestimmen von fehlerfrei aktivierbaren Funktionsblöcken aus einer vorgehaltenen Menge von Funktionsblöcken mit deren Ablaufvarianten auf Basis eines eingelesenen Bestückungsdatensatzes, der die aktuelle Bestückung der Waschanlage mit Maschinenbauteilen (und damit eine Maschinenkonfiguration) repräsentiert zur proaktiven und automatischen Berechnung von Notbetriebsprogrammen bzw. Fehlerbetriebsmöglichkeiten; wahlweise bzw. optional können die berechneten Notprogramme zum Notbetrieb der Waschanlage zur Bestätigung durch den Anwender auf einer Benutzerschnittstelle ausgegeben werden, bevor sie ausgeführt werden;
- Automatische oder halbautomatische Steuerung einer Waschanlage zur Ausführung des Notbetriebs auf Basis der berechneten Notbetriebsprogramme (bzw. Fehlerbetriebsmöglichkeiten).

Die Erfindung betrifft eine Fehlerprozedur, falls ein Ausfall eines Betriebsaggregates oder eines Maschinenbauteils der Waschanlage festgestellt wird, der bisher den weiteren vorgesehenen Betrieb der Anlage verhindert, so dass die Anlage bisher im Stand der Technik stillstehen würde (also z.B. bei Ausfall eines Betriebsaggregates, wie der Dachbürste, die für die jeweilige Funktion, wie "Dachwäsche" notwendig ist). Damit die Anlage weiterhin und mit möglichst umfassender Funktionalität betrieben werden kann, wird das erfindungsgemäße Verfahren bereitgestellt. Dieses zielt darauf ab, die Anlage automatisch in einen Notbetrieb zu überführen und dabei eine Menge von Notwaschprogrammen mit Funktionsblöcken und deren Ablaufvarianten zur Verfügung zu stellen, die trotz detektiertem Fehler noch fehlerfrei ausführbar sind und somit Fehlerbetriebsmöglichkeiten zu berechnen. Gemäß diesem Vorschlag kann das bestehende Waschprogramm in ein Notwaschprogramm überführt werden bzw. so angepasst werden, dass eine fehlerfreie Ausführung des Waschprogramms möglich wird (z.B. mit andere Funktionsblöcken oder anderen Ablaufvarianten der bestimmten Funktionsblöcke). Dabei kann die Qualität verringert und/oder der erforderliche Zeitaufwand für die Ausführung erhöht sein.

Im Folgenden wird eine Definition der in dieser Anmeldung verwendeten Begrifflichkeiten gegeben.

Bei dem Bestückungsdatensatz handelt es sich um einen digitalen Datensatz, der eine Ausrüstung von Maschinenbauteilen der Waschanlage repräsentiert. Der Bestückungsdatensatz kann z.B. die Installation von Betriebsaggregaten, von Software und/oder Hardware kennzeichnen oder die aktuell vorliegende Ausstattung der Maschine von mehreren Ausstattungsvarianten. So können je nach Maschine unterschiedliche Betriebsaggregate, wie Pumpen, Ventile, Antriebsaggregate etc. eingebaut sein. Die vorhandene Ausstattung bzw. die verbauten Maschinenbauteile sind in dem Bestückungsdatensatz repräsentiert. Der Bestückungsdatensatz umfasst somit insbesondere ein Datensatzelement, das die "Verbau"-Situation und damit die Konfiguration von Maschinenbauteilen bzw. Betriebsaggregaten in der Waschanlage repräsentiert. Dazu gehört auch die Information, an welcher Position der Waschanlage welches Bauteil verbaut ist und in welcher Version und Konfiguration. Der Bestückungsdatensatz kann vorzugsweise einen veränderlichen bzw. dynamischen Betriebskonstellationsdatensatz und einen unveränderlichen und fixen Anteil, nämlich den Konfigurationsdatensatz, umfassen. Der fixe Anteil (Konfigurationsdatensatz) bezieht sich auf die (ausgelieferte) Ausrüstung und Konfiguration von Maschinenbauteilen der Waschanlage. Er bleibt üblicherweise nach Auslieferung der Anlage fix. Der variable, veränderliche Anteil (Betriebskonstellationsdatensatz) bezieht sich auf Änderungen von Betriebsbedingungen, wie z.B. veränderter Wasserdruck. Er kann sich auch auf Änderungen an den Maschinenbauteilen beziehen (z.B. im Fehlerfall oder bei Ausfall eines Maschinenbauteiles). Der variable Anteil des Bestückungsdatensatzes wird vorzugsweise kontinuierlich in aktualisierter Form eingelesen oder erfasst. Dies erfolgt vorzugsweise in einer Zeitphase nach Auslieferung der Anlage und während des Betriebs.

Der Bestückungsdatensatz wird üblicherweise direkt mit der Anlage ausgeliefert und ist in einem lokalen Speicher oder einer Speicherkarte auf der Anlage hinterlegt und verfügbar. Alternativ kann er auch über eine Schnittstelle abgerufen werden (z.B. httpbasierte Schnittstelle).

Vorzugsweise kann der Bestückungsdatensatz auch eine Konfiguration bzw. eine Parametrisierung der Maschinenbauteile umfassen, wie beispielsweise eine Länge und/oder ein Durchmesser eines Schlauches, die maximale Pumpleistung einer Dosierpumpe, die Größe von Vorratsbehältern und/oder maximale oder minimale Fahrgeschwindigkeiten von Antrieben etc. Damit kann die Erzeugung des Notwaschprogramms im Fehlerfall noch spezifischer und dediziert für die jeweilige Konfiguration der Maschinenbauteile ausgeführt werden.

In einer weiteren bevorzugten Ausführungsform der Erfindung umfasst der Bestückungsdatensatz ein Positionselement. Dieses kennzeichnet eine Position des Maschinenbauteils in der Waschanlage. Damit können auch mehrere Maschinenbauteile desselben Typs der Waschanlage dediziert adressiert werden. So können beispielsweise mehrere gleichartige Bürsten an unterschiedlichen Positionen der Waschanlage angeordnet sein. Das zu erzeugende Notwaschprogramm kann in dieser Ausführungsform der Erfindung vorteilhafterweise auf die jeweilige Positionierung der Bürste abstellen und deren zeitliche Aktivierung regeln.

Ein einzelnes Maschinenbauteil oder eine Gruppe von Maschinenbauteilen sind ausgebildet, um einen bestimmten Funktionsblock des Waschprogramms bzw. Notwaschprogramms auszuführen. Das Notwaschprogramm kann eine Abfolge von Schritten umfassen. Dazu können unterschiedliche fehlerfrei betreibbare Funktionsblöcke erforderlich sein. Nach vordefinierbaren Regeln kann somit ein erster Funktionsblock mit einem zweiten und einem dritten in bestimmter Abfolge zu einem Notwaschprogramm, insbesondere Notbetriebsprogramm verschaltet werden. So kann z.B. eine Gruppe von Maschinenbauteilen, wie eine Wasserpumpe, eine Dosierpumpe, Wasserventile, Bürstenrotationsantriebe und ggf. weitere Hub- und Fahrantriebe erforderlich sein, um den Funktionsblock (bzw. -baustein) "Bürstenwäsche" auszuführen. Zur Ausführung eines Schrittes des Waschprogramms ist somit ein einzelnes Maschinenbauteil oder einer Gruppe von Maschinenbauteilen erforderlich. Ist eines dieser Maschinenbauteile ausgefallen oder liefert einen Fehler, kann dieses nicht mehr für ein Waschprogramm verwendet werden. In einer weiteren bevorzugten Ausführungsform der Erfindung umfasst das Waschprogramm eine Abfolge von Schritten, die auf gleichen und/oder unterschiedlichen Maschinenbauteilen ausgeführt werden. Bei den Maschinenbauteilen handelt es sich z.B. um Betriebsaggregate der Waschanlage oder um Baueinheiten derselben. Die Maschinenbauteile sind vorzugsweise elektronisch steuerbar oder sogar regelbar und verfügen dazu über elektronische Schnittstellen zum Datenaustausch.

Bei den Funktionsblöcken handelt es sich um übergeordnete Funktionen, die die Waschanlage ausführen soll. Ein Funktionsblock ist ein modularer Baustein des Waschprogramms. Der Funktionsblock ist somit ein Modul oder ein Schritt im Waschprogramm. So können z.B. ein Funktionsblock "Felgenreinigung", "Bürstenwäsche", "Vorreinging" und/oder "Intensivtrocknung" vorgesehen sein. Es können jederzeit neue Funktionsblöcke definiert werden. Erfindungsgemäß wird aufgrund von aktuell erfassten Größen bestimmt, welche Funktionsblöcke zu einem an die lokal und aktuell bestehenden Gegebenheiten angepassten Waschprogramm verschaltet werden sollen. Die Funktionsblöcke beschreiben die auszuführenden Funktionen oder Aktionen der Waschanlage nicht auf einer Bauteilebene (also nicht auf Basis der Maschinenbauteilebene, wie z.B. "Ventil 1 auf", "Schalter 2 schließen", "Dosierpumpe ein"), sondern auf einer übergeordneten funktionalen Ebene und kennzeichnen die Funktionen aus Betreiber- oder Anwendersicht. Ein Funktionsblock bezieht sich somit auf einen Waschprogrammabschnitt, wie z.B. "Radwäsche". Ein Funktionsblock kann in unterschiedlichen Ablaufvarianten betrieben werden. Dabei können die Ablaufvarianten unterschiedliche Maschinenbauteile bzw. Betriebsaggregate erfordern. Im Beispiel der Radwäsche wird z.B. in einer ersten Ablaufvariante, die Radwaschbürste vom/zum Rad bewegt, was den Betrieb eines Zustellmotors erfordert. In einer zweiten Ablaufvariante kann die Radwäsche nur mit Hochdruck ausgeführt werden. In diesem Fall wird die Hochdruckdüse aktiviert und eine Bewegung der Radwaschbürste bzw. der Motorbetrieb ist nicht erforderlich. Falls z.B. der Zustellmotor im erfassten Fehlerzustand als defekt identifiziert worden ist, kann der Funktionsblock "Radwäsche" dennoch in der zweiten Ablaufvariante angeboten und fehlerfrei ausgeführt werden.

Ein Funktionsblock hat somit bestimmte Anforderungen auf Bauteilebene. So setzt z.B. eine Bürstenwäsche das Maschinenbauteil "Bürste" voraus. Welche technischen Voraussetzungen, insbesondere auf Bauteilebene, mit einem bestimmten Funktionsblock verbunden sind, sind in dem jeweiligen Funktionsblock hinterlegt und fest codiert. Ein Funktionsblock umfasst somit Informationen über eine zulässige Verschaltbarkeit im Prozessablauf mit anderen Funktionsblöcken. So kann - schematisch beschrieben - für einen Block 1 definiert sein, dass vor dessen Ausführung notwendigerweise Block a und b und anschließend Block d auszuführen sind. Beispielsweise kann definiert sein, dass vor einer "Trocknung" immer eine "Wäsche" stattgefunden haben muss. Oder vor dem Schritt "Intensivreinigung" ist es notwendig, dass ein Reiniger appliziert worden ist. Weiterhin können bestimmte andere Funktionsblöcke in einer White-List hinterlegt sein, die mit dem jeweiligen Funktionsblock verschaltet werden dürfen. Entsprechend können bestimmte andere Funktionsblöcke in einer Black-List hinterlegt sein, die nicht zulässig zu einem Waschprogramm verschaltet werden können und somit nicht kombiniert werden dürfen. In einer bevorzugten Ausführungsform der Erfindung sind die Verschaltungsinformationen und damit die zulässigen Kombinationsmöglichkeiten von Funktionsblöcken zu einem Waschprogramm direkt in dem Funktionsblock gespeichert.

Dem Betreiber wird eine Menge von Funktionsblöcken angeboten. Diese sind entweder unmittelbar auf der Anlage zur Auswahl verfügbar oder sie können über eine Schnittstelle von einem Server oder einer Datenbank eingelesen werden. Aus dieser Menge von Funktionsblöcken werden zum Erzeugen von Notwaschprogrammen auf der jeweiligen Anlage nur solche zur Auswahl durch den Betreiber angeboten, die im jeweils erfassten Fehlerfall in der jeweiligen Anlage noch fehlerfrei aktivierbar sind. Dies ist in der Regel nur eine eingeschränkte Auswahl aus der Menge von Funktionsblöcken. Grundsätzlich sind nur diejenigen Funktionsblöcke aktivierbar, für die die erforderlichen Maschinenbauteile in der Anlage fehlerfrei ausgebildet sind. So kann z.B. der Funktionsblock "Felgenreinigung" nur aktivierbar sein, wenn die beiden Maschinenbauteile "Felgenbürsten" auf beiden Fahrzeugseiten in der Anlage verbaut sind und keinen Fehler melden. Dies hat den Vorteil, dass der Betreiber nur diejenigen Funktionsblöcke auswählen kann, die er vor Ort auf seiner Anlage mit der jeweiligen Ausrüstung fehlerfrei ausführen kann. Die anderen Funktionsblöcke werden ihm erst gar nicht angeboten. Aus der Menge der fehlerfrei aktivierbaren Funktionsblöcke kann der Betreiber dann bestimmte auswählen, um im Fehlerfall ein Notwaschprogramm zu erzeugen. Aus seinen Eingaben (seiner Auswahl) und den Informationen in den ausgewählten Funktionsblöcken zu deren Verschaltbarkeit wird dann automatisch ein Programmablauf zu einem Waschprogramm berechnet und erzeugt. Es ist auch möglich, dass aus der Menge der fehlerfrei aktivierbaren Funktionsblöcke automatisch ein Notwaschprogramm erzeugt wird, also ohne weitere Benutzereingaben. Dies hat den Vorteil, dass zu jedem Zeitpunkt neue Funktionsblöcke definiert und bereitgestellt und zu einem Notwaschprogramm verschaltet werden können, ohne dass die Maschinensteuerung geändert werden muss.

Abhängig von den aktuell erfassten Gegebenheiten und Anforderungen, die in dem Bestückungsdatensatz repräsentiert sind, werden die in dem spezifischen Fehlerfall ausführbar aktivierbare Funktionsblöcke bestimmt und können, wie oben bereits erläutert - z.B. auf einer (grafischen) Benutzeroberfläche - zur Auswahl durch den Anwender ausgegeben werden. Daraufhin hat der Anwender, insbesondere der Betreiber oder Servicetechniker, die Möglichkeit, bestimmte Funktionsblöcke auszuwählen, die er gerne auf der Maschine für seine Kunden zur Anwendung anbieten möchte. Als vorteilhaft erweist es sich, dass der Anwender nicht über spezifischen Wissen über die technische Auslegung der Waschanlage und Fehlerbehandlungsroutinen verfügen muss. Es werden ihm automatisch nur diejenigen Funktionsblöcke zur Auswahl angeboten, die bei den erfassten Betriebsbedingungen (repräsentiert im Bestückungsdatensatz) und bei dem erfassten Fehlerzustand ausführbar sind und damit in der Regel nur eine Auswahl. Alternativ kann die Auswahl nicht durch eine Benutzereingabe, sondern aufgrund von Voreinstellungen/Werkseinstellungen erfasst werden oder über eine Schnittstelle von separaten elektronischen Modulen (z.B. von einem Server, der mit der Anlage verbunden ist und der auf die erfasste Fehlermeldung zugreifen kann) eingelesen werden. Ein Vorteil der Erfindung ist auch darin zu sehen, dass der Anwender keine zeitliche Reihenfolge bei der Auswahl seiner Funktionsblöcke beachten muss. Die zeitliche Verschaltung zu einem Notwaschprogramm ergibt sich automatisch aus den Verschaltungsregeln und wird erfindungsgemäß automatisch berechnet. So kann der Anwender beispielsweise einen Funktionsblock C, dann A und dann B auswählen. Das erzeugte Notwaschprogramm hat aber aufgrund der hinterlegten Verschaltungsregeln die Abfolge A; B und C.

Vorzugsweise werden alle Schritte des oben beschriebenen Verfahrens automatisch ausgeführt, insbesondere erfolgt das Bestimmen von fehlerfrei aktivierbaren Funktionsblöcken und das Erzeugen eines Notwaschprogramms automatisch. Damit kann die Anlage auch bei einem erfassten Fehler an einem Bauteil dennoch in einem Notbetrieb betrieben werden, was insgesamt die Effizienz des Anlagenbetriebs steigert und Stillstandzeiten der vollständigen Anlage aufgrund von einzelnen Bauteilfehlern vermeidet.

Der Begriff "in Antwort auf den erfassten Fehlerzustand" soll bedeuten, dass das Bestimmen von fehlerfrei aktivierbaren Funktionsblöcken abhängig von dem erfassten Fehlerzustand erfolgt. Das Berechnen von Notbetriebsprogrammen ist somit stets abhängig von dem jeweils aktuell erfassten Fehlerzustand der Anlage. Die Notbetriebsprogramme werden somit für einen bestimmten Fehlerzustand der gesamten Anlage berechnet. Ein Fehlerzustand ist ein technischer Zustand der Anlage im Fehlerfall. Ein Fehlerzustand kann durch den Ausfall eines oder mehrere Bauteile bedingt sein. Es kann jedoch auch sein, dass eine Fehlermeldung eines Bauteils nicht automatisch zu einem Fehlerzustand der Anlage führt, etwa dann, wenn für das fehlerhaft erkannte Bauteil ein Ersatzbauteil vorgesehen ist und bei Ausfall des Bauteils automatisch das Ersatzbauteil zugeschaltet wird. In diesem Fall befindet sich die Anlage nicht in einem Fehlerzustand, obwohl eine Fehlermeldung existiert. Ein Fehlerzustand ist somit systemisch und betrifft die gesamte Anlage und basiert auf einer Vielzahl von einzelnen Fehlermeldungen in Abhängigkeit von der jeweiligen Konfiguration der Maschine (repräsentiert im Bestückungsdatensatz). Ein Fehlerzustand ist anlagenspezifisch, aber bauteilübergreifend. Er repräsentiert das Fehlerbild für die gesamte Anlage auf systemische Weise und berücksichtigt dabei deren Konfiguration und Bestückung. Eine Fehlermeldung, hingegen, ist bauteilspezifisch.

Das Ermitteln des Fehlerzustandes basiert damit auf der erfassten Fehlermeldung eines Betriebsaggregates (z.B. "Dachbürstenantriebsmotor defekt") und kann im einfachsten Fall eine direkt ableitbare nicht aktivierbare Funktionalität als Fehlerzustand indizieren (z.B. "Funktion der Dachbürstenwäsche nicht aktivierbar"). In komplexeren Anwendungsfällen kann die aktivierbaren bzw. nicht aktivierbare Funktionalität unter Zugriff auf eine Regelbasis ermittelt werden, in der Vorschriften hinterlegt sind, welche Funktionalität, welche Betriebsaggregate voraussetzen. Hier kann beispielsweise hinterlegt sein, dass für ein erstes Betriebsaggregat im Fehlerfall ein zweites Betriebsaggregat als Ersatz bereits in der Anlage ausgestattet ist (z.B. Ersatzbatterie), das automatisch oder manuell zugeschaltet / angeschlossen werden muss, so dass die Funktionalität trotz Fehlermeldung bereitgestellt werden kann.

Der Fehlerzustand wird aus zumindest einer erfassten Fehlermeldung, die ihrerseits auf Sensorsignalen basiert, berechnet. Der Fehlerzustand ist vorzugsweise in einer Datenstruktur repräsentiert und gespeichert. Aus einem weiteren Speicher können Daten zugreifbar sein, die Angaben zur nicht-verfügbaren (da nicht fehlerfrei aktivierbaren) Funktionalität des jeweiligen (fehlerhaften) Bauteils bereitstellen. In einer bevorzugten Ausführungsform der Erfindung wird hier ein zweidimensionales Feld (array) als Datenstruktur verwendet. Es kann in Form einer Lookup-Tabelle implementiert sein, die z.B. für eine Menge von Funktionsblöcken, die dafür erforderlichen Bauteile bzw. Betriebsaggregate festlegt und unterschiedliche Ablaufvarianten, in denen der jeweilige Funktionsblock betrieben werden kann definiert und welche Betriebsaggregate dafür notwendig sind. Die Einträge in der Tabelle sind indiziert und können somit mit einem einfachen Zugriff adressiert werden.

Der Begriff "Notbetrieb" kennzeichnet eine Betriebsmöglichkeit der Maschine bzw. Waschanlage mit einem eingeschränkten Funktionsumfang, insbesondere einem Funktionsumfang, der auf fehlerfrei aktivierbaren Funktionsblöcken basiert und somit das als fehlerhaft erkannte Bauteil nicht benötigt.

Die vorliegende Erfindung betrifft einen Zustand während des Betriebs der Anlage und insbesondere einen Fehlerzustand mit hinterlegten Prozeduren für ein automatisches ,exception handling' und Fehlerbehandlungsroutinen (,error handling') und gegebenenfalls mit der Einleitung von automatischen Fehlerbeseitigungsmaßnahmen (,recovery procedures').

Die Erfindung hat den Vorteil, dass sie automatisch in einen Notbetrieb überführt werden kann, sobald es zu einem Ausfall eines Betriebsaggregates kommt und dieser mit der Fehlermeldung über entsprechende Sensoren erfasst worden ist. Bislang konnte die Waschanlage im Fehlerfall nicht mehr weiter betrieben werden. Ein Servicetechniker musste zunächst den Fehler des Maschinenbauteils beheben. Häufig fällt aber nur ein weniger wichtiges Maschinenbauteil aus. Hier erweist es sich als besonders vorteilhaft, dass der Ausfall des jeweiligen Maschinenbauteils mittels des Bestückungsdatensatzes erfasst wird. Nun können weiterhin Funktionsblöcke ausgewählt werden, die dieses Bauteil nicht benötigen. Die Waschanlage kann somit weiterbetrieben werden, während parallel das fehlerhafte Aggregat ausgewechselt werden kann. Damit können die Wartungskosten gesenkt werden.

In einer weiteren bevorzugten Ausführungsform der Erfindung erfolgt das Notbetreiben der Waschanlage mit dem erzeugten Notwaschprogramm nur nach Erfassen eines Verifikationssignals (z.B. seitens des Betreibers oder seitens des Anlagenherstellers über eine datentechnische Verbindung). Damit kann die Sicherheit des Anlagenbetriebs erhöht werden, indem sozusagen ein Plausibilitätscheck durchgeführt wird. Der Betreiber der Anlage oder ein extern zugeschalteter Techniker kann dann das erzeugte Notwaschprogramm freigeben oder freischalten. Es ist auch möglich, dass das erzeugte Notwaschprogramm mit in einer Datenbank hinterlegten Menge von Referenznotbetriebsprogrammen verglichen wird oder indem bestimmte häufige Fehlerkonstellation automatisch überprüft werden.

In einer weiteren bevorzugten Ausführungsform der Erfindung wird das erzeugte Notwaschprogramm einer automatischen Fehlerüberprüfung unterzogen. Die Fehlerüberprüfung bezieht sich hier nicht auf die Bauteile der Waschanlage, sondern auf eine fehlerhafte Verschaltung zu einem Notwaschprogramm. Die Fehlerüberprüfung erfolgt auf Basis von vordefinierten Regeln. Diese sind vorzugsweise nach dem Wenn-Dann-Prinzip strukturiert (z.B. "Wenn Notwaschprogramm eine Bürstenwäsche umfasst, dann darf für das Bürstenaggregat keine Fehlermeldung vorliegen"). Somit kann ein Plausibilitätscheck ausgeführt werden. Ist dieser nicht erfolgreich, dann kann eine Fehlermeldung ausgegeben werden. Die Fehlermeldung kann einen automatisch erzeugten Korrekturvorschlag umfassen und/oder kann eine Angabe von technischen Folgen bei Fehlbetrieb der Waschanlage umfassen. Wenn z.B. aufgrund von aktuell erfassten Betriebsbedingungen eine zu hohe Förderung der Dosierpumpe eingestellt ist, so kann auf den erhöhten Dosiermittelverbrauch und damit verbundene erhöhte Kosten hingewiesen werden.

Gemäß einer bevorzugten Ausführungsform der Erfindung umfasst die Berechnung von Notbetriebsprogrammen für die Waschanlage das Berechnen einer Abfolge von ausgewählten Funktionsblöcken, nämlich fehlerfrei aktivierbaren Funktionsblöcken, zum Notbetreiben der Waschanlage, wobei die Abfolge unter Zugriff auf eine vordefinierte Regelbasis erfolgt. In der Regelbasis ist definiert, welcher Funktionsblock mit welchen anderen Funktionsblöcken zu einem Waschprogramm verschaltet werden kann, in welcher zeitlichen Abfolge und welche Bauteile für den jeweiligen Funktionsblock erforderlich sind.

Gemäß einer weiteren, bevorzugten Ausführungsform der Erfindung erfolgt das Erfassen einer Fehlermeldung durch Auslesen von Sensordaten zumindest eines Sensors. Üblicherweise werden eine Vielzahl von Sensoren von unterschiedlichen Bauteilen der Waschanlage und/oder auch von externen Versorgungseinheiten der Waschanlage (Wasserzufuhr, Druckleitungen etc.) ausgelesen, um vorteilhafterweise einen möglichst umfangreichen Fehlerzustand der Gesamtanlage zu erfassen.

Gemäß einer weiteren, bevorzugten Ausführungsform der Erfindung wird bei dem Verfahren nach dem Erfassen einer Fehlermeldung und dem Ermitteln eines Fehlerzustandes eine automatische Diagnoseprozedur (zur Fehlerfindung) ausgeführt, die das Durchlaufen eines Entscheidungsbaumes umfasst, um eine technische Vordiagnose für den erfassten Fehlerzustand bereitzustellen, damit z.B. der Austausch eines Bauteils oder ein Ersatzbauteil vorgeschlagen werden kann.

Gemäß einer weiteren, bevorzugten Ausführungsform der Erfindung ist die Diagnoseprozedur selbstlernend und für jeden automatisch ermittelten Ersatzbauteilvorschlag, der für den jeweiligen Fehlerzustand ermittelt wird, wird ein Bewertungssignal erfasst, das eine Bewertung der Fehlerbehebungsmaßnahme durch den Ersatz des Bauteils repräsentiert und das an die Diagnoseprozedur zurückgemeldet wird. Damit kann die Diagnoseprozedur kontinuierlich verbessert werden. Falls sich nach dem Austausch des fehlerhaften Bauteils der Fehlerzustand nicht oder nicht signifikant verbessert, ist das Bewertungssignal entsprechend negativ. Das negative Bewertungssignal wird dann an die Diagnoseprozedur zurückgemeldet. Im anderen Fall, wenn der Austausch erfolgreich war und daraufhin der ermittelte Fehlerzustand aufgehoben werden konnte, dann ist das Bewertungssignal entsprechend positiv und wird als Regelungssignal an die Diagnoseprozedur zurückübermittelt.

Gemäß einer weiteren, bevorzugten Ausführungsform der Erfindung wird eine Menge von auch im ermittelten Fehlerzustand ausführbaren Notbetriebsprogrammen berechnet und auf einer Benutzerschnittstelle ausgegeben, so dass ein Anwender (z.B. Betreiber der Waschanlage) ein Geeignetes auswählen kann, indem er auf der Benutzerschnittstelle ein Verifikationssignal eingibt.

Gemäß einer weiteren, bevorzugten Ausführungsform der Erfindung werden alle Verfahrensschritte lokal auf der Waschanlage ausgeführt. Alternativ oder kumulativ können zumindest ausgewählte Verfahrensschritte auf einem der Waschanlage zugeordneten Server (der z.B. vom Hersteller der Anlage betrieben werden kann) ausgeführt werden.

Gemäß einer weiteren, bevorzugten Ausführungsform der Erfindung ist das Bestimmen von fehlerfrei aktivierbaren Funktionsblöcken komplexer. Das Verfahren sieht vor, dass für jeweils einen Funktionsblock unterschiedliche Ausführungsvarianten definiert sind. Diese können vordefiniert sein. Damit ist es möglich, den jeweiligen Funktionsblock in unterschiedlichen Ausführungsvarianten auszuführen, wobei die Ausführungsvarianten jeweils einen unterschiedlichen Satz von fehlerfrei aktivierbaren Betriebsaggregaten erfordern. Dies bedeutet, dass in einem bestimmten Fehlerzustand durchaus ein und derselbe Funktionsblock auch bei Erfassen eines Fehlers an einem der dafür erforderlichen Betriebsaggregate dennoch fehlerfrei weiterbetrieben werden kann, indem eine andere Ausführungsvariante gewählt wird. Dies erfolgt vorzugsweise automatisch, z.B. über einen Zugriff auf die Lookup-Tabelle.

Gemäß einem zweiten Aspekt bezieht sich die vorliegende Erfindung auf ein Fehlersteuermodul zur Steuerung eines Notbetriebs einer Fahrzeugwaschanlage (auch kurz Waschanlage) im Fehlerfall, umfassend:
- Eine Fehlerschnittstelle, die zum Erfassen einer Fehlermeldung der Waschanlage ausgebildet ist;
- Einer Recheneinheit, die dazu bestimmt ist, in Antwort auf die erfasste Fehlermeldung einen Fehlerzustand zu ermitteln und fehlerfrei aktivierbare Funktionsblöcke mit deren Ablaufvarianten zu bestimmen auf Basis eines eingelesenen Bestückungsdatensatzes, der die aktuelle Bestückung der Waschanlage mit Maschinenbauteilen repräsentiert, um Notbetriebsprogramme zu berechnen und wobei die Recheneinheit weiterhin dazu bestimmt ist, auf Basis der berechneten Notbetriebsprogramme Steuerbefehle zu erzeugen, um die Waschanlage in einem Notbetriebszustand zu steuern.

In einer bevorzugten Ausführungsform der Erfindung kann das Fehlersteuermodul mit einer Benutzerschnittstelle ausgebildet sein, damit der Anwender z.B. ein Verifikationssignal, ein Bestätigungssignal eingeben oder andere Einstellungen treffen kann. Über die Benutzerschnittstelle kann der Anwender die bereitgestellte Funktionalität des Fehlersteuermoduls steuern und selbiges bedienen.

Bevorzugt ist die Fehlerschnittstelle mit einer Vielzahl von Sensoreinheiten verbunden. Die Sensoreinheiten dienen zur Erfassung von Betriebsparametern der Waschanlage. Sie können intern in Betriebsaggregaten bzw. Bauteilen der Waschanlage oder extern und außerhalb derselben angeordnet sein. Alle Sensoreinheiten in ihrer Gesamtheit bzw. die von Ihnen aggregierten Signale repräsentieren einen Fehlerzustand der Maschine. Im Unterschied zum Stand der Technik wird somit nicht nur ein singuläres Signal eines Bauteils erfasst, sondern erfindungsgemäß wird einen Gesamtzustand, insbesondere ein Gesamt-Fehlerzustand der Anlage ermittelt auf Basis der einzelnen Fehlermeldungen oder Fehlersignale.

Gemäß einem dritten Aspekt betrifft die Erfindung eine Waschanlage mit einer Maschinensteuerung, die mit einem vorstehend beschriebenen Fehlersteuermodul ausgebildet ist.

Das vorstehend beschrieben Verfahren kann als Computerprogramm implementiert sein. Eine weitere Aufgabenlösung sieht somit ein Computerprogramm vor zur Durchführung aller Verfahrensschritte des oben näher beschriebenen Verfahrens, wenn das Computerprogramm auf einem Computer, einem elektronischen Gerät oder Bauteil (vorzugsweis lokal auf der Waschanlage) ausgeführt wird. Dabei ist es auch möglich, dass das Computerprogramm auf einem für den Computer oder das elektronische Gerät oder Bauteil lesbaren Medium gespeichert ist.

Das computer-implementierte Verfahren kann vorzugsweise auch als plattformunabhängige Web-basierte Applikation implementiert sein. Dies hat den Vorteil, dass keine weiteren Installationserfordernisse seitens des Betreibers notwendig sind. Der Anwender greift über eine vorzugsweise IP-basierte Schnittstelle auf einen Server zu, auf dem das Computerprogramm zur Ausführung des Verfahrens installiert ist. Damit kann vorteilhafterweise die Recheneinheit bzw. deren Funktionalität (insbesondere: Ermitteln eines Fehlerzustandes, Berechnen eines Notbetriebsprogramms, Erzeugen von Steuerbefehlen) auf einen ressourcen-starken Server ausgelagert werden. Vorteilhafterweise können bei der Berechnung weitere Eingangsgrößen (insbesondere von anderen parallel betriebenen Waschanlagen) durch einen entsprechenden Speicher oder Datenbankzugriff berücksichtig werden.

Eine weitere Aufgabenlösung besteht auch in einem Computerprogrammprodukt, das in einen Speicher eines Computers oder eines elektronischen Gerätes geladen oder ladbar ist mit einem Computerprogramm zur Durchführung des oben näher beschriebenen Verfahrens, wenn das Computerprogramm auf dem Computer oder dem elektronischen Gerät ausgeführt wird. Bei dem elektronischen Gerät kann es sich um einen Steuerrechner für die Waschanlage handeln, der in die Waschanlage in einer Schalt- und Steuereinheit integriert oder über eine Schnittstelle als separates Modul zugeschaltet ist.

In der folgenden detaillierten Figurenbeschreibung werden nicht einschränkend zu verstehende Ausführungsbeispiele mit deren Merkmalen und weiteren Vorteilen anhand der Zeichnung besprochen.

### Kurze Beschreibung der Figuren

Fig. 1 eine schematische Darstellung einer Waschanlage mit einem Fehlersteuermodul gemäß einer bevorzugten Ausführungsform der Erfindung;
Fig. 2 eine schematische Übersicht über ein Fehlersteuermodul mit weiteren Bauteilen gemäß einer bevorzugten Ausführungsform der Erfindung;
Fig. 3 zeigt ein Ablaufdiagramm eines Verfahrens gemäß einer bevorzugten Ausführungsform der Erfindung.

### Detaillierte Beschreibung der Erfindung

Im Folgenden wird die Erfindung unter Bezugnahme auf die Figuren und anhand von Ausführungsbeispielen erläutert.

Die Erfindung zielt auf die flexible Erzeugung von Notwaschprogrammen bei Ausfall eines Betriebsaggregates einer Fahrzeugwaschanlage WA ab.

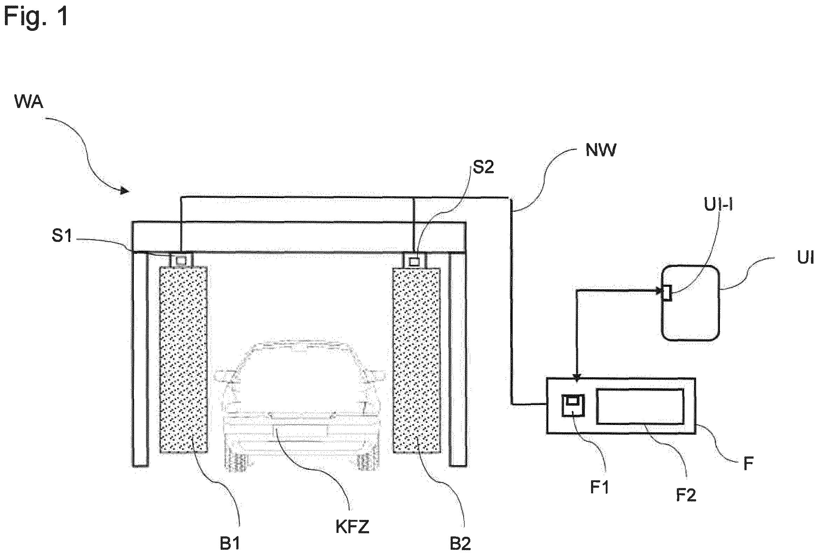

**Fig. 1** zeigt auf schematische Weise eine automatische Waschanlage WA, die bei einem Betreiber fertig montiert ist und bei der ein Fehler an einem Betriebsaggregat erfasst worden ist. Um einen Ausfall der kompletten Anlage aufgrund des Betriebsaggregatfehlers zu vermeiden, ist erfindungsgemäß eine elektronische Einheit, nämlich ein Fehlersteuermodul F, vorgesehen.

Das Fehlersteuermodul F dient bei Erfassung eines Fehlers zur lokalen Erzeugung von Notwaschprogrammen sozusagen am Ort des Betreibers. Das Fehlersteuermodul F kann in eine Schalt- und Steuerzentrale der Waschanlage WA integriert sein (dies soll schematisch in Fig. 1 dargestellt sein) oder als separater lokaler Rechner über eine interne Schnittstelle der Waschanlage WA zugeschaltet werden.

Das Fehlersteuermodul F umfasst eine Recheneinheit F2. Die Recheneinheit F2 dient zur Erzeugung von Notwaschprogrammen, die trotz des erfassten Fehlers an einem Bauteil der Waschanlage WA fehlerfrei ausführbar sind und angeboten werden sollen. Das Notwaschprogramm wird somit regelbasiert erzeugt. Die Regeln beziehen sich auf den Bestückungsdatensatz, der spezifiziert, mit welchen Maschinenbauteilen die Waschanlage WA ausgestattet ist und auf die erfasste Fehlermeldung und den ermittelten Fehlerzustand sowie möglicherweise auf Eingaben eines Anwenders, die den Leistungsumfang der Anlage im Fehlerfall festlegen. Aus diesen Führungsgrößen wird automatisch mittels einer Programmlogik ein Notwaschprogramm erzeugt.

Wie in Fig. 1 schematisch dargestellt, kann es sich bei der Waschanlage WA um eine Portalwaschanlage mit zwei Seitenbürsten handeln, die in Fig. 1 jeweils mit den Bezugszeichen B1 und B2 gekennzeichnet sind. Üblicherweise umfasst die Waschanlage noch weitere Betriebsaggregate, wie z.B. eine Dachbürste (in Fig. 1 nicht dargestellt), diverse Ventile, Pumpen, Vorratsbehälter für reinigungsaktive Substanzen etc., Alle oder ausgewählte Betriebsaggregate der Waschanlage WA sind mit Sensoreinheiten S ausgebildet, die - wie in Fig.1 beispielhaft für die beiden Bürsten B1, B2 dargestellt - die Sensoren S1 und S2 umfassen können. Die Sensoreinheiten S dienen zur Erfassung von Parametern, die einen Betriebszustand des Aggregates repräsentieren. Aus den erfassten Sensorsignalen kann die Fehlerfreiheit oder Fehlerhaftigkeit eines Betriebsaggregates abgeleitet werden. Falls beispielsweise die rechte Seitenbürste B2 defekt ist oder nicht fehlerfrei betrieben werden kann, meldet der Sensor S2 ein Fehlersignal. Die Sensoreinheiten S sind über ein Netzwerk NW mit dem Fehlersteuermodul F datentechnisch verbunden und können zumindest unidirektional Daten austauschen. Zum Datenaustausch umfasst das Fehlersteuermodul F eine Fehlerschnittstelle F1. Diese dient insbesondere zum Erfassen von Sensorsignalen der Sensoreinheiten S. Die Sensoreinheiten S können entweder direkt zumindest eine Fehlermeldung spezifizieren oder aus den erfassten und aggregierten Signalen der Sensoreinheiten S1, S2, S3,.. kann zumindest eine Fehlermeldung errechnet werden.

Das Fehlersteuermodul F kann in einer bevorzugten Ausführungsform der Erfindung eine - insbesondere grafische - Benutzeroberfläche UI umfassen, über die der Anwender Daten eingeben oder auslesen kann und über die das Fehlersteuermodul F gesteuert werden kann. Dabei kann es sich auch um die Oberfläche eines mobilen Endgerätes, wie eines Tablets oder Smartphones handeln. Falls die Benutzeroberfläche als separates Bauteil vorgesehen ist, ist dieses über eine Schnittstelle UI-I, die insbesondere drahtlos ist (WLAN oder Funkverbindung) mit dem Fehlersteuermodul F gekoppelt.

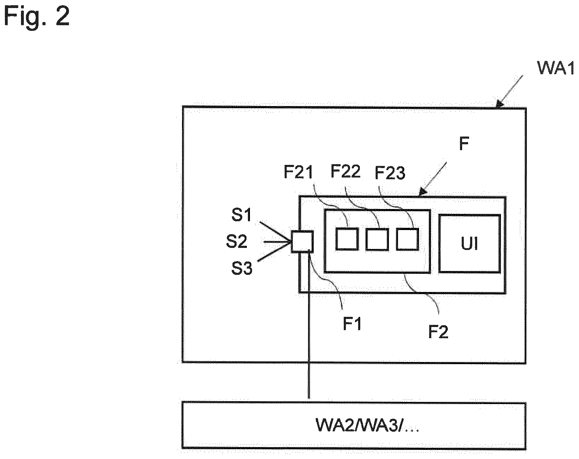

Wie in **Fig. 2** dargestellt, kann die Recheneinheit F2 des Fehlersteuermoduls F mehrere Einheiten umfassen:
- eine Zustandsermittlungseinheit F21, die dazu bestimmt ist, in Antwort auf die erfasste Fehlermeldung einen Fehlerzustand der Fahrzeugwaschanlage WA zu ermitteln;
- eine Funktionsblockbestimmungseinheit F22, die dazu bestimmt ist, auf Basis eines eingelesenen Bestückungsdatensatzes, der die aktuelle Bestückung der Fahrzeugwaschanlage WA mit Maschinenbauteilen repräsentiert, für den ermittelten Fehlerzustand fehlerfrei aktivierbare Funktionsblöcke zu bestimmen;
- eine Berechnungseinheit F23, die dazu bestimmt ist, zumindest ein Notbetriebsprogramm zu berechnen.

Die Recheneinheit F2 ist dazu bestimmt, auf Basis des berechneten zumindest einen Notbetriebsprogrammes, Steuerbefehle zu erzeugen, um die Fahrzeugwaschanlage WA in einem Notbetriebszustand zu steuern oder in einem Notzustand zu betreiben.

Wie in Fig. 2 schematisch dargestellt, kann das Fehlersteuermodul F auch Referenzdaten von anderen Waschanlagen WA2, WA3,... erfassen. Dies kann z.B. über die Fehlerschnittstelle F1 erfolgen. Mit anderen Worten, können Referenzdaten von anderen Anlagen erfasst und verarbeitet werden, um Informationen für den jeweiligen Fehlerfall auf der Anlage WA1 bereitstellen zu können, wie dieser auf anderen Anlagen behandelt und/oder behoben werden konnte. Auch kann erfasst werden, welche Notbetriebsprogramme für den jeweiligen Fehlerfall auf der Referenzanlage berechnet worden sind. Diese können dem Anwender zum Vergleich und/oder zur Auswahl angeboten werden. Zusätzlich können die von der Berechnungseinheit F23 berechneten Notbetriebsprogramme kommentiert werden in Hinblick darauf, ob diese in vergleichbaren Fällen auf anderen Anlagen bereits ebenfalls als Notbetriebsprogramm ermittelt worden sind. Zum Zwecke der Datensicherheit, können identifizierenden Hinweise (z.B. auf den Betreiber) gelöscht werden.

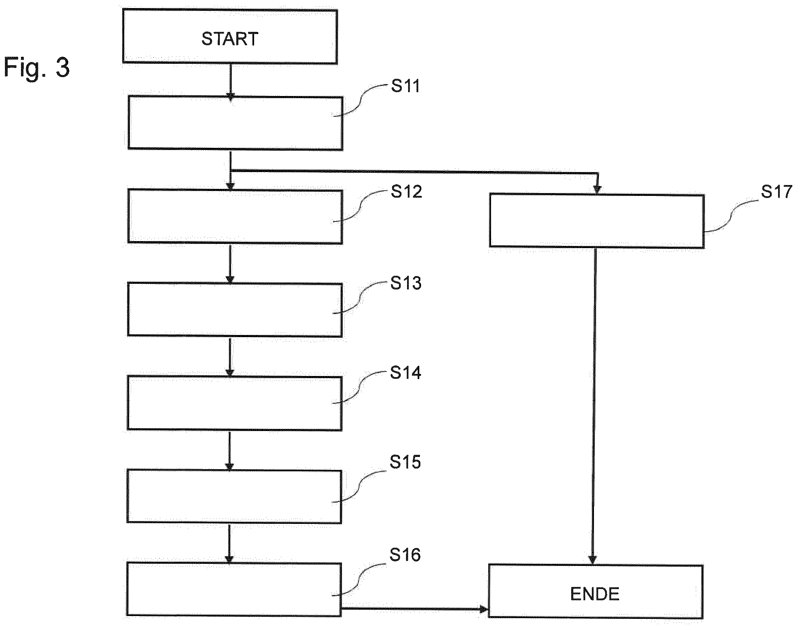

In **Fig. 3** ist ein Ablaufdiagramm eines Verfahrens dargestellt.

Nach dem Start des Verfahrens wird in Schritt S11 zumindest eine Fehlermeldung erfasst.

Aus der zumindest einen erfassten Fehlermeldung kann in Schritt S12 ein Fehlerzustand der Fahrzeugwaschanlage WA ermittelt werden. Dazu kann auf einen internen Speicher der Waschanlage WA zugegriffen werden, in dem zu jedem Sensorsignal ein Fehlercode zugeordnet ist. Die erfassten Sensorsignale sind Bauteil-spezifisch. Das heisst, ein Sensorsignal umfasst stets ein Identifikationselement, das das jeweilige Bauteil bzw. Betriebsaggregat der Waschanlage WA spezifiziert, auf dem das Sensorsignal erfasst worden ist (z.B. kann aus dem Signal S1 ausgelesen werden, dass es auf der Bürste B1 erfasst worden ist und somit diese Bürste fehlerhaft ist. Diese Zuordnung wird in dem Speicher abgelegt. Zudem ist in diesem oder einem anderen Speicher hinterlegt, welcher Funktionsblock, welche Betriebsaggregate erfordert. Hier kann z.B. spezifiziert sein, dass eine Bürstenwäsche immer die Betriebsaggregate B1 und B2 erfordert, um fehlerfrei ausführbar zu sein.

In Schritt S13 wird ein Bestückungsdatensatz, der die aktuelle Bestückung und damit auch die Konfiguration der Fahrzeugwaschanlage mit Maschinenbauteilen bzw. Betriebsaggregaten repräsentiert, eingelesen. Dies kann nach den Schritten S11 und S12 ausgeführt werden. Alternativ kann der Verfahrensschritt S13 zum Einlesen des Bestückungsdatensatzes auch vor Schritt S11 oder parallel dazu ausgeführt werden.

In Schritt S14 wird in Antwort auf (also in Abhängigkeit von) den/dem erfassten Fehlerzustand der gesamten Waschanlage WA eine Menge von fehlerfrei aktivierbaren Funktionsblöcken auf Basis des in Schritt S13 eingelesenen Bestückungsdatensatzes bestimmt.

Eine Menge von Notbetriebsprogrammen wird in Schritt S15 bestimmt. Dies erfolgt auf Grundlage der in Schritt S14 bestimmten Menge der fehlerfrei aktivierbaren Funktionsblöcke.

In Schritt S16 wird die Fahrzeugwaschanlage zur Ausführung des Notbetriebs angesteuert. Dies erfolgt auf Basis der berechneten Menge von Notbetriebsprogrammen. Danach kann das Verfahren enden.

Alternativ kann nach Schritt S11 zu Schritt S17 verzweigt werden. In Schritt S17 kann quasi parallel zum Erzeugen eines Notwaschprogramms eine automatische Diagnoseprozedur für den erfassten Fehler ausgeführt werden. Diese basiert auf einem in einem Speicher hinterlegten Entscheidungsbaum, der je nach erfassten Sensorsignalen und sonstigen Signalrückläufen automatisch durchlaufen wird. Die Blätter des Entscheidungsbaumes repräsentieren Datensätze, um eine technische Vordiagnose für den erfassten Fehler bereitstellen zu können. So kann z.B. automatisch ein Ersatzbauteil vorgeschlagen werden.

Um die Selbstdiagnoseprozedur zu verbessern, wird für jede automatisch erstellte Vordiagnose (ggf. mit Ersatzbauteilvorschlag) eine Rückmeldung seitens des Anwenders erfasst, die die Güte bzw. Qualität der Vordiagnose im Nachhinein kennzeichnet. Diese Rückmeldungen können auf einer Benutzeroberfläche UI eingeben werden und werden der Selbstdiagnoseprozedur zugeführt. Damit kann diese selbstlernend ausgebildet werden.

Die Verfahrensschritte des Verfahrens werden vorzugsweise in der angegebenen Reihenfolge ausgeführt. Dies muss allerdings nicht in unmittelbarer Folge geschehen. So ist es z.B. möglich, dass das Erzeugen des Notaschprogramms erst nach Ablauf einer gewissen Zeitspanne oder nach Erfassen von weiteren Sensorsignalen ausgeführt wird.

Alle Verfahrensschritte des Verfahrens können durch elektronische Vorrichtungen (Schaltkreise, z.B. auf einem printed circuit board - PCB) implementiert werden, die zum Ausführen des jeweiligen Verfahrensschrittes geeignet sind. Umgekehrt können alle Funktionen, die von gegenständlichen Merkmalen ausgeführt werden, ein Verfahrensschritt eines Verfahrens sein. So kann z.B. der Verfahrensschritt "Einlesen eines Bestückungsdatensatzes" durch eine Eingangsschnittstelle implementiert werden, die über die genannte, entsprechende Funktionalität zum Einlesen verfügt.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren. So kann die Erfindung auf unterschiedliche Typen von automatischen Waschanlagen angewendet werden, wie Portalwaschanlagen oder Waschanlagen zur Selbstbedienung. Weiterhin liegt es z.B. ebenso im Rahmen der Erfindung alternativ oder kumulativ zur grafischen Benutzeroberfläche andere Bedien- oder Steuerelemente als Schnittstelle zur Dateneingabe oder -Ausgabe bereitzustellen. Für einen Fachmann ist es insbesondere offensichtlich, dass die Erfindung nicht nur für bestimmte Konfigurationen von Waschanlagen angewendet werden kann, sondern auch für Waschanlagen, die mit unterschiedlichen Maschinenbauteilen ausgestattet sind oder mit Maschinenbauteilen, die unterschiedliche konfiguriert sind (z.B. unterschiedliches Leistungsspektrum einer Pumpe etc.).

Des Weiteren können die Bauteile des Fehlersteuermoduls F und/oder der Waschanlage WA auf derselben elektronischen Einheit oder auf mehrere physikalische Produkte verteilt realisiert sein. Sie stehen dann über entsprechende Schnittstellen in Datenaustausch. Dies erhöht die Modularität des Systems.

Der Schutzbereich der vorliegenden Erfindung ist durch die Ansprüche gegeben und wird durch die in der Beschreibung erläuterten oder den Figuren gezeigten Merkmale nicht beschränkt.

## Patentansprüche

1. Verfahren zur Steuerung eines Notbetriebs einer Fahrzeugwaschanlage (WA) im Fehlerfall, umfassend folgende Verfahrensschritte:
- Erfassen (S11) einer Fehlermeldung eines Maschinenbauteils zur Ermittlung (S12) eines Fehlerzustandes der Fahrzeugwaschanlage (WA);
- In Antwort auf den erfassten Fehlerzustand: Bestimmen (S14) von fehlerfrei aktivierbaren Funktionsblöcken auf Basis eines eingelesenen (S13) Bestückungsdatensatzes, der die aktuelle Bestückung der Fahrzeugwaschanlage mit Maschinenbauteilen repräsentiert zur Berechnung (S15) von Notbetriebsprogrammen;
- Steuerung einer Fahrzeugwaschanlage zur Ausführung des Notbetriebs (S16) auf Basis der berechneten Notbetriebsprogramme.

2. Verfahren nach Anspruch 1, bei dem die Berechnung (S15) von Notbetriebsprogrammen für die Fahrzeugwaschanlage (WA) das Berechnen einer Abfolge von ausgewählten fehlerfrei aktivierbaren Funktionsblöcken zum Notbetreiben der Fahrzeugwaschanlage (WA) umfasst, wobei die Abfolge unter Zugriff auf eine vordefinierte Regelbasis erfolgt.

3. Verfahren nach einem der vorangehenden Ansprüche, bei dem das Verfahren weiterhin den Verfahrensschritt umfasst, dass nach dem Erfassen der Fehlermeldung (S11) alle oder ausgewählte weitere(n) Fehlermeldungen aggregiert werden, um automatisch den Fehlerzustand in Bezug auf die gesamte Fahrzeugwaschanlage (WA) zu ermitteln (S12).

4. Verfahren nach einem der vorangehenden Ansprüche, bei dem das Erfassen einer Fehlermeldung durch Auslesen von Sensordaten zumindest einer Sensoreinheit der Fahrzeugwaschanlage (WA) erfolgt.

5. Verfahren nach einem der vorangehenden Ansprüche, bei dem das Verfahren nach dem Erfassen (S11) einer Fehlermeldung eine automatische Diagnoseprozedur (S17) ausführt, die das Durchlaufen eines Entscheidungsbaumes umfasst, um eine technische Vordiagnose für den erfassten Fehler bereitzustellen, die ein Ersatzbauteil vorschlägt.

6. Verfahren nach dem unmittelbar vorangehenden Anspruch, bei dem die Diagnoseprozedur (S17) selbstlernend ist und für jeden Ersatzbauteilvorschlag auf die jeweilige Fehlermeldung ein Bewertungssignal erfasst wird, das eine Bewertung der Fehlerbehebungsmaßnahme durch den Ersatz des Bauteils repräsentiert und das an die Diagnoseprozedur (S17) zurückgemeldet wird.

7. Verfahren nach einem der vorangehenden Ansprüche, bei dem eine Menge von auch im ermittelten (S12) Fehlerzustand ausführbaren Notbetriebsprogrammen berechnet wird aus der ein Anwender ein geeignetes Notbetriebsprogramm auswählen kann, indem er auf einer Benutzerschnittstelle (UI) ein Verifikationssignal eingibt.

8. Verfahren nach einem der vorangehenden Ansprüche, bei dem alle Verfahrensschritte lokal auf der Fahrzeugwaschanlage (WA) ausgeführt werden.

9. Verfahren nach einem der vorangehenden Ansprüche, bei dem das Bestimmen (S14) von fehlerfrei aktivierbaren Funktionsblöcken ein Bestimmen von fehlerfrei ausführbaren Ablaufvarianten für die fehlerfrei aktivierbaren Funktionsblöcke umfasst.

10. Fehlersteuermodul (F) zur Steuerung eines Notbetriebs einer Fahrzeugwaschanlage (WA) im Fehlerfall, umfassend:
- Eine Fehlerschnittstelle (F1), die zum Erfassen einer Fehlermeldung in Bezug auf die Fahrzeugwaschanlage (WA) ausgebildet ist;
- Eine Recheneinheit (F2), mit
∘ einer Zustandsermittlungseinheit (F21), die dazu bestimmt ist, in Antwort auf die erfasste Fehlermeldung einen Fehlerzustand der Fahrzeugwaschanlage (WA) zu ermitteln und mit
∘ einer Funktionsblockbestimmungseinheit (F22), die dazu bestimmt ist für den ermittelten Fehlerzustand fehlerfrei aktivierbare Funktionsblöcke zu bestimmen auf Basis eines eingelesenen Bestückungsdatensatzes, der die aktuelle Bestückung der Fahrzeugwaschanlage (WA) mit Maschinenbauteilen repräsentiert, und mit
o einer Berechnungseinheit (F23), die dazu bestimmt ist, Notbetriebsprogramme zu berechnen und
- wobei die Recheneinheit (F2) weiterhin dazu bestimmt ist, auf Basis der berechneten Notbetriebsprogramme Steuerbefehle zu erzeugen, um die Fahrzeugwaschanlage (WA) in einem Notbetriebszustand zu steuern.

11. Fehlersteuermodul (F) nach dem unmittelbar vorangehenden Anspruch, das mit einer Benutzerschnittstelle (UI) ausgebildet ist.

12. Fehlersteuermodul (F) nach einem der vorangehenden auf das Fehlersteuermodul gerichteten Ansprüche, bei dem die Fehlerschnittstelle (F1) mit einer Vielzahl von Sensoreinheiten (S1, S2, S3,...) verbunden ist.

13. Fahrzeugwaschanlage (WA) mit einer Maschinensteuerung, die mit einem Fehlersteuermodul (F) nach einem der unmittelbar vorangehenden, auf das Fehlersteuermodul bezogenen Ansprüche ausgebildet ist.

14. Computerprogramm mit Programmabschnitten zur Durchführung aller Verfahrensschritte des Verfahrens gemäß einem der vorangehenden Verfahrensansprüche, wenn das Computerprogramm auf einem Computer oder einem elektronischen Gerät ausgeführt wird.

## Claims

1. Method for controlling an emergency operation of a vehicle washing installation (WA) in the case of a fault, comprising the method steps of:
- detecting (S11) an error message of a machine component for ascertaining (S12) a fault state of the vehicle washing installation (WA);
- in response to the detected fault state: specifying (S14) function blocks, which can be activated in a fault-free manner, on the basis of a read-in (S13) equipment data set which represents the current equipping of the vehicle washing installation with machine components for computing (S15) emergency operation programs;
- controlling a vehicle washing installation for carrying out the emergency operation (S16) on the basis of the computed emergency operation programs.

2. Method as claimed in claim 1, wherein the computing (S15) of emergency operation programs for the vehicle washing installation (WA) comprises the computing of a sequence of selected function blocks, which can be activated in a fault-free manner, for the emergency operation of the vehicle washing installation (WA), wherein the sequence is effected with accessing of a pre-defined rule base.

3. Method as claimed in any one of the preceding claims, wherein the method further comprises the method step that, after detecting the error message (S11), all or selected further error messages are aggregated in order to automatically ascertain (S12) the fault state in relation to the entire vehicle washing installation (WA).

4. Method as claimed in any one of the preceding claims, wherein the detecting of an error message is effected by reading out sensor data of at least one sensor unit of the vehicle washing installation (WA).

5. Method as claimed in any one of the preceding claims, wherein, after detecting (S11) an error message, the method carries out an automatic diagnosis procedure (S17) which comprises processing of a decision tree in order to provide a technical pre-diagnosis for the detected fault, which pre-diagnosis proposes a replacement component.

6. Method as claimed in the immediately preceding claim, wherein the diagnosis procedure (S17) is self-learning and for each replacement component proposal in response to the respective error message an evaluation signal is detected which represents an evaluation of the fault fixing measure by the replacement of the component and which is fed back to the diagnosis procedure (S17).

7. Method as claimed in any one of the preceding claims, wherein a group of emergency operation programs which can be executed even in the ascertained (S12) fault state is computed, from which group a user can select a suitable emergency operation program, in that he inputs a verification signal on a user interface (UI).

8. Method as claimed in any one of the preceding claims, wherein all of the method steps are carried out locally at the vehicle washing installation (WA).

9. Method as claimed in any one of the preceding claims, wherein the determining (S14) of function blocks which can be activated in a fault-free manner comprises specifying sequence variations, which can be executed in a fault-free manner, for the function blocks which can be activated in a fault-free manner.

10. Fault control module (F) for controlling an emergency operation of a vehicle washing installation (WA) in the case of a fault, comprising:
- a fault interface (F1) which is designed to detect an error message in relation to the vehicle washing installation (WA);
- a computing unit (F2), having
∘ a state-ascertaining unit (F21) which is intended, in response to the detected error message, to ascertain a fault state of the vehicle washing installation (WA) and having
∘ a function block-specifying unit (F22) which is intended to specify function blocks, which can be activated in a fault-free manner, for the ascertained fault state on the basis of a read-in equipment data set representing the current equipping of the vehicle washing installation (WA) with machine components, and having
∘ a computing unit (F23) which is intended to compute emergency operation programs, and
- the computing unit (F2) is further intended, on the basis of the computed emergency operation programs, to generate control commands in order to control the vehicle washing installation (WA) in an emergency operation state.

11. Fault control module (F) as claimed in the immediately preceding claim which is designed having a user interface (UI).

12. Fault control module (F) as claimed in any one of the preceding claims directed to the fault control module, wherein the fault interface (F1) is connected to a large number of sensor units (S1, S2, S3,...).

13. Vehicle washing installation (WA) comprising a machine controller which is designed having a fault control module (F) as claimed in any one of the immediately preceding claims related to the fault control module .

14. Computer program with program sections for carrying out all method steps of the method as claimed in any one of the preceding method claims when the computer program is executed on a computer or an electronic device.

## Revendications

1. Procédé de commande d'un fonctionnement d'urgence d'une installation de lavage de véhicules (WA) en cas de défaut, comprenant les étapes de procédé suivantes :
- détection (S11) d'un message d'erreur d'un composant de machine pour déterminer (S12) un état de défaut de l'installation de lavage de véhicules (WA) ;
- en réponse à l'état d'erreur détecté : spécifier (S14) des blocs fonctionnels pouvant être activés sans erreur sur la base d'un jeu de données d'équipement lu (S13) qui représente l'équipement actuel de l'installation de lavage de véhicules avec des composants de machine pour le calcul (S15) de programmes de fonctionnement d'urgence ;
- commander une installation de lavage de véhicules pour effectuer l'opération d'urgence (S16) sur la base des programmes d'opération d'urgence calculés.

2. Procédé selon la revendication 1, dans lequel le calcul (S15) de programmes de fonctionnement d'urgence pour l'installation de lavage de véhicules (WA) comprend le calcul d'une séquence de blocs fonctionnels sélectionnés, qui peuvent être activés sans erreur, pour le fonctionnement d'urgence de l'installation de lavage de véhicules (WA), dans lequel la séquence est effectuée en accédant à une base de règles prédéfinie.

3. Procédé selon l'une quelconque des revendications précédentes, dans lequel le procédé comprend en outre l'étape de procédé selon laquelle, après la détection du message d'erreur (S11), tous les autres messages d'erreur ou des messages d'erreur sélectionnés sont agrégés afin de déterminer automatiquement (S12) l'état de défaut par rapport à l'ensemble de l'installation de lavage de véhicules (WA).

4. Procédé selon l'une quelconque des revendications précédentes, dans lequel la détection d'un message d'erreur est effectuée par lecture de données de capteur d'au moins une unité de capteur de l'installation de lavage de véhicules (WA).

5. Procédé selon l'une quelconque des revendications précédentes, dans lequel, après la détection (S11) d'un message d'erreur, le procédé met en œuvre une procédure de diagnostic automatique (S17) qui comprend le traitement d'un arbre de décision afin de fournir un pré-diagnostic technique pour le défaut détecté, lequel pré-diagnostic propose un composant de remplacement.

6. Procédé selon la revendication immédiatement précédente, dans lequel la procédure de diagnostic (S17) est à auto-apprentissage et pour chaque proposition de composant de remplacement en réponse au message d'erreur respectif, un signal d'évaluation est détecté qui représente une évaluation de la mesure de correction de défaut par le remplacement du composant et qui est renvoyé à la procédure de diagnostic (S17).

7. Procédé selon l'une quelconque des revendications précédentes, dans lequel on calcule un groupe de programmes de fonctionnement d'urgence qui peuvent être exécutés même dans l'état de défaut constaté (S12), groupe dans lequel un utilisateur peut sélectionner un programme de fonctionnement d'urgence approprié, en entrant un signal de vérification sur une interface utilisateur (UI).

8. Procédé selon l'une quelconque des revendications précédentes, dans lequel toutes les étapes du procédé sont réalisées localement sur l'installation de lavage de véhicules (WA).

9. Procédé selon l'une quelconque des revendications précédentes, dans lequel la détermination (S14) de blocs fonctionnels pouvant être activés sans erreur comprend la spécification de variations de séquence, pouvant être exécutées sans erreur, pour les blocs fonctionnels pouvant être activés sans erreur.

10. Module de commande de défaut (F) pour commander un fonctionnement d'urgence d'une installation de lavage de véhicules (WA) en cas de défaut, comprenant :
- uneinterface de défaut (F1) qui est conçue pour détecter un message d'erreur en relation avec l'installation de lavage de véhicules (WA) ;
- une unité de calcul (F2), ayant
∘ une unité de détermination d'état (F21) qui, en réponse au message d'erreur détecté, est destinée à déterminer un état d'erreur de l'installation de lavage de véhicules (WA) et qui présente les caractéristiques suivantes
∘ une unité de spécification de blocs fonctionnels (F22) qui est destinée à spécifier des blocs fonctionnels pouvant être activés sans erreur pour l'état d'erreur constaté sur la base d'un jeu de données d'équipement lu qui représente l'équipement actuel de l'installation de lavage de véhicules (WA) avec des composants de machine, et avec
∘ une unité de calcul (F23) qui est destinée à calculer des programmes de fonctionnement d'urgence, et
- l'unité de calcul (F2) est en outre destinée, sur la base des programmes de fonctionnement d'urgence calculés, à générer des commandes de contrôle afin de contrôler l'installation de lavage de véhicule (WA) dans un état de fonctionnement d'urgence.

11. Module de contrôle de défaut (F) selon la revendication immédiatement précédente, qui est conçu avec une interface utilisateur (UI).

12. Module de contrôle de défauts (F) selon l'une quelconque des revendications précédentes, dirigé vers le module de contrôle de défauts, dans lequel l'interface de défauts (F1) est reliée à un grand nombre d'unités de capteurs (S1, S2, S3, ...).

13. Installation de lavage de véhicules (WA) comprenant une commande de machine qui est conçue avec un module de contrôle de défaut (F) selon l'une quelconque des revendications immédiatement précédentes relatives au module de contrôle de défaut.

14. Programme d'ordinateur avec des sections de programme pour réaliser toutes les étapes du procédé selon l'une quelconque des revendications de procédé précédentes lorsque le programme d'ordinateur est exécuté sur un ordinateur ou un dispositif électronique.
